(19) Europäisches Patentamt
European Patent Office
Office européen des brevets

(11) **EP 0 970 388 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(21) Anmeldenummer: **98928072.2**

(22) Anmeldetag: **25.03.1998**

(51) Int Cl.⁷: **G01S 3/00**

(86) Internationale Anmeldenummer:
**PCT/DE98/00878**

(87) Internationale Veröffentlichungsnummer:
**WO 98/43106 (01.10.1998 Gazette 1998/39)**

(54) **VERFAHREN ZUM RICHTUNGSSCHÄTZEN**

METHOD FOR EVALUATING DIRECTION

PROCEDE D'EVALUATION DE LA DIRECTION

(84) Benannte Vertragsstaaten:
**BE DE FR GB SE**

(30) Priorität: **25.03.1997 DE 19712549**

(43) Veröffentlichungstag der Anmeldung:
**12.01.2000 Patentblatt 2000/02**

(73) Patentinhaber: **SIEMENS AKTIENGESELLSCHAFT**
**80333 München (DE)**

(72) Erfinder:
- **BAIER, Paul, Walter**
  **D-67661 Kaiserslautern (DE)**
- **BLANZ, Josef**
  **D-66862 Kindsbach (DE)**
- **HAARDT, Martin**
  **D-81477 München (DE)**
- **SCHMALENBERGER, Ralph**
  **D-67653 Kaiserslautern (DE)**

(56) Entgegenhaltungen:
EP-A- 0 701 334        WO-A-95/09490
WO-A-96/37974        DE-A- 19 511 752

**Beschreibung**

Die Erfindung betrifft Verfahren zum Richtungsschätzen von Teilwellen eines Empfangssignals, beispielsweise in Basisstationen für Mobilfunknetze oder in Anwendungen für Radar- oder Sonarsysteme bzw. für seimische Meßsysteme.

Ein oder mehrere Teilnehmersignale können durch Senden von einem oder mehreren Kommunikationsteilnehmern zu einer gemeinsamen Empfangsstation, durch Senden von einem oder mehreren Sendern mit sich überlagernden Meßsignalen oder durch Reflexionen eines Meßsignals an Hindernissen oder Gesteinsschichten hervorgerufen werden.

Aus R.Roy und T.Kailath, "ESPRIT - Estimation of signal parameters via rotational invariance techniques", IEEE Trans. Acoust., Speech, Signal Processing, vol. ASSP-37, pp.984-995, Juli 1989 sind Verfahren zu Bestimmen der Einfallsrichtungen verschiedener Signale bekannt. Z.B. ein aus DE 195 11 752 bekanntes Richtungsschätzverfahren nach dem UNITARY-ESPRIT-Verfahren führt die Richtungsbestimmung von Teilwellen direkt aus den Empfangssignalen durch.

Beispielhaft wird im weiteren die Anwendung der Richtungsschätzung im Mobilfunk diskutiert.

Der Richtungsschätzung erschließt sich mit dem Mobilfunk oder mobilfunkähnlichen Verfahren ein neues Anwendungsgebiet. Signale unterliegen bei ihrer Ausbreitung in einem Ausbreitungsmedium Störungen durch Rauschen. Durch Beugungen und Reflexionen durchlaufen Signalkomponenten verschiedene Ausbreitungswege und überlagern sich beim Empfänger und führen dort zu Auslöschungseffekten. Zum weiteren kommt es bei mehreren Signalquellen zu Überlagerungen dieser Signale. Frequenzmultiplex (FDMA), Zeitlagenmultiplex (TDMA) oder ein als Codemultiplex (CDMA) bekanntes Verfahren dienen der Unterscheidung der Signalquellen und damit zur Auswertung der Signale.

Wird beispielsweise ein CDMA-Verfahren zur Teilnehmerseparierung eingesetzt, dann können in einem Frequenzkanal gleichzeitig mehrere Teilnehmersignale übertragen und beim Empfänger separiert werden.

Aus P.Jung, J.Blanz, "Joint detection with coherent receiver antenna diversity in CDMA mobile radio systems", IEEE Transactions on Vehicular Technology, Bd. VT-44, 1995, S.76-88, sind mathematische Beschreibungen, die Funktionsweise und die Struktur von CDMA (Code Division Multiple Access)-Funkübertragungssystemen bekannt. Beim Einsatz solcher Systeme in der Mobilkommunikation besteht eine Funkschnittstelle zwischen ortsfesten Basisstationen und beweglichen Mobilstationen. Die Übertragungsstrecke von einer Basisstation zu einer Mobilstation wird als Abwärtsstrecke und die Übertragungsstrecke von einer Mobilstation zu einer Basisstation wird als Aufwärtsstrecke bezeichnet.

In P.Jung, J.Blanz, "Joint detection with coherent receiver antenna diversity in CDMA mobile radio systems", IEEE Transactions on Vehicular Technology, Bd. VT-44, 1995, S.76-88, wird weiterhin gezeigt, daß die Übertragungsqualität in solchen Funkübertragungssystemen dadurch verbessert werden kann, daß anstelle eines einzigen Empfangssensors eine Anordnung mit mehreren Empfangssensoren verwendet werden kann. Entsprechend der Terminologie obengenannter Druckschriften bezeichnet man mit K die Anzahl der von einer Basisstation gleichzeitig im selben Frequenzkanal übertragenen Teilnehmersignale, z.B. von versorgten Mobilstationen. Ka bezeichnet die Anzahl der Empfangssensoren, die einer Empfangseinrichtung, beispielsweise der Basisstation, zugeordnet sind. In einem solchen Szenario bestehen folglich in der Aufwärtsstrecke K*Ka Funkkanäle zwischen den K Mobilstationen und den Ka Empfangssensoren der Basisstation. Jeder dieser Funkkanäle ist durch ein zeitdiskretes Basisbandäquivalent seiner Kanalimpulsantwort $g^{(k)(ka)}$ mit k=1..K, ka=1.. Ka, charakterisiert. Diese Kanalimpulsantworten $g^{(k)\,(ka)}$ werden bei der Datendetektion zur Kanalmodellierung benutzt. Aussagen über die Einfallsrichtungen von Teilwellen sind bei diesem Verfahren nicht vorgesehen.

Aus WO 95 09490 A ist ein Mobilfunksystem mit räumlicher Teilnehmerseparierung bekannt, bei dem zwei unterschiedliche Klassen von Kanälen mit unterschiedlicher Kapazität benutzt werden. Nach einer Positionsbestimmung für die Mobilstation wird mit engen richtungsselektiven Abstrahlungsdiagrammen gesendet. Aus EP 0 701 334 A ist aus einem zellularen Funksystem ein Verfahren zur Bestimmung von Kanalimpulsantworten bekannt.

Der Erfindung liegt die Aufgabe zugrunde, ein verbessertes Verfahren zur Richtungsschätzung anzugeben, daß mit geringem Berechnungsaufwand eine Reduzierung des Einflusses von Störsignalen auf die Richtungsschätzung leistet. Diese Aufgabe wird durch das Verfahren mit den Merkmalen des Patentanspruchs 1 gelöst. Weiterbildungen der Erfindung sind den Unteransprüchen zu entnehmen.

Für das erfindungsgemäße Verfahren zum Richtungsschätzen von Tellwellen zumindest eines Teilnehmersignals ist einer Empfangseinrichtung eine Anzahl Ka Empfangssensoren zugeordnet. Über die Empfangssensoren werden Ka Empfangssignale empfangen, die von mindestens einem durch eine senderindividuelle Feinstruktur geprägten Teilnehmersignal herrühren, wobei ein k-tes Teilnehmersignal, k=1..K, durch Kd sich in ihrer Einfallsrichtung am Empfangsort unterscheidenden Teilwellen übertragen wird. Aus den Empfangssignalen werden den Ka Empfangssensoren zugeordnete Kanalimpulsantworten bestimmt und aus den Kanalimpulsantworten die Einfallsrichtung von zumindest einer Teilwelle ermittelt.

Die Genauigkeit der Richtungsschätzung ist damit verbessert, da die Kanalimpulsantworten als Rohinformationen für die Richtungsschätzung die Charakteristika der Kanäle bereits berücksichtigen. Zur Kanalschätzung kann in der Empfangseinrichtung auf Wissen über das empfangene Signal in Form der senderindividuellen Feinstruktur zurückgegriffen werden. Somit ist die Richtungsschätzung genauer als mit unbekannten, noch zu detektierenden Daten.

Nach einer vorteilhaften Weiterbildung der Erfindung werden die Kanalimpulsantworten aus die senderindividuellen Feinstrukturen bildenden Trainingssequenzen der Teilnehmersignale bestimmt. Solche Trainingssequenzen sind aus dem Mobilfunk, z.B. als Midambles in GSM Nutzkanälen, bekannt. Diese Trainingssequenzen lassen sich auf einfache Weise für das erfindungsgemäße Verfahren nutzen. Die Implementierung des erfindungsgemäßen Verfahrens in Mobilfunknetze ist somit mit geringem Aufwand möglich.

Die durch die senderindividuellen Feinstrukturen separierbaren Teilnehmersignale von mehreren Sendern oder Reflektoren treffen bei der Empfangseinrichtung ein und überlagern sich zu den Empfangssignalen, wobei diese Signale gleichzeitig in einem Frequenzkanal übertragen werden. Die Feinstrukturen können vorteilhafterweise gleichzeitig zur Richtungsschätzung und zur Teilnehmerseparierung verwendet werden, falls eine Nachrichtenübertragung stattfindet. Dies bedeutet empfängerseitig eine weitere Aufwandsverringerung.

Nach einer weiteren vorteilhaften Ausgestaltung der Erfindung werden zum Ermitteln der Einfallsrichtungen der Teilwellen zusätzlich Informationen zumindest über eine der folgenden Werte: Einfallsrichtung, Leistung, Spektrum oder eine Korrelationsmatrix von Störsignalen berücksichtigt. Je mehr Wissen über Störquellen vorliegt, umso besser können die Signale, für die die Einfallsrichtungen geschätzt werden sollen, ausgewertet werden. Auch durch diese Maßnahme läßt sich die Richtungsschätzung verbessern.

Nach einer Weiterbildung der Erfindung sind die Teilnehmersignale durch eine Entspreizung mit individuellen Teilnehmerkodes separierbar. Hiermit können die Einfallsrichtungen der Teilwellen den Teilnehmersignalen zugeordnet werden. Diese Art der Zuordnung ermöglicht die vorteilhafte Anwendung der Erfindung z.B. in Mobilfunksystemen, bei denen die Richtungsschätzung eine zusätzliche Information für die Datendetektion darstellt.

Vorteilhafterweise werden zum Ermitteln der Einfallsrichtung hochauflösende Richtungsschätzverfahren verwendet. Beispielsweise ein MUSIC-Verfahren (Multiple Signal Classification) oder ein eindimensionales oder mehrdimensionales UNITARY-ESPRIT-Verfahren (Estimation of Signal Parameters via Rotational Invariance Techniques) führen mit wirtschaftlichen Rechenaufwand eine hochgenaue Richtungsschätzung aufbauend auf den Kanalimpulsantworten durch. Das MUSIC- oder das ESPRIT-Verfahren nutzen Kenntnisse der komplexen Strahlungscharakteristik der Empfangssensoren bzw. bestimmte geometrische Voraussetzungen für die Anordnung der Empfangssensoren, um eine genaue und mit geringem Signalverarbeitungsaufwand auskommende Richtungsschätzung vorzunehmen.

Zum Bestimmen der Einfallsrichtungen der Teilwellen wird nach einer weiteren Ausgestaltung der Erfindung eine Mittelung der bestimmten Werte über ein Zeitintervall durchgeführt. Innerhalb eines Zeitintervalls, das einem Vielfachen der Kohärenzzeit der Kanalimpulsantworten entsprechen kann, ändert sich die Einfallsrichtung wenig. Eine Mittelung verbessert die Richtungsschätzung, da zufällige Fehler reduziert werden. Bei einer funkblockweisen Übertragung von Teilnehmersignalen in TDMA-Systemen, kann die Mittelung für einen Funkblock oder auch eine Vielzahl von Funkblöcken durchgeführt werden. Die Anzahl der Funkblöcke für eine Mittelung, d.h. das Zeitintervall kann dabei einstellbar sein, wobei Änderungen der Einfallsrichtungen eine Änderung des Zeitintervalls hervorrufen. Ändern sich die Kanalbedingungen schnell, beispielsweise bei einer Beschleunigung der Bewegung einer Mobilstation, dann kann die Richtungsschätzung auf einen kürzeren Zeitintervall beschränkt werden.

Neben den bereits erläuterten Anwendungen in Mobilfunksystemen sind weitere vorteilhafte Anwendungen in einem Radar-bzw. Sonarsystem oder in einem seismischen Meßsystem vorgesehen. Bei letzteren Anwendungen kann das zumindest ein Teilnehmersignal auch in Form einer oder mehrerer reflektierter Teilwellen bei der Empfangsstation eintreffen.

Im folgenden wird die Erfindung anhand von zwei Ausführungsbeispielen, bei denen zum einen die Richtungsschätzung für eine Datendetektion in Mobilfunksystemen verwendet wird bzw. zum anderen ein Radarsystem eine Richtungsschätzung für einen Flugkörper durchführt, bezugnehmend auf zeichnerische Darstellungen näher erläutert.

Dabei zeigen

FIG 1　ein Blockschaltbild eines Mobilfunknetzes,

FIG 2　ein Blockschaltbild einer Rahmenstruktur der Funkblöcke für die Funkschnittstelle,

FIG 3　ein Blockschaltbild einer Empfangseinrichtung mit zugeordneten Empfangssensoren,

FIG 4　ein Blockschaltbild eines richtungsselektiven Kanalschätzers,

FIG 5    ein Blockschaltbild einer Detektionseinrichtung,

FIG 6    eine schematische Darstellung eines Radarszenarios, und

FIG 7    ein Blockschaltbild einer Empfangseinrichtung des Radarsystems.

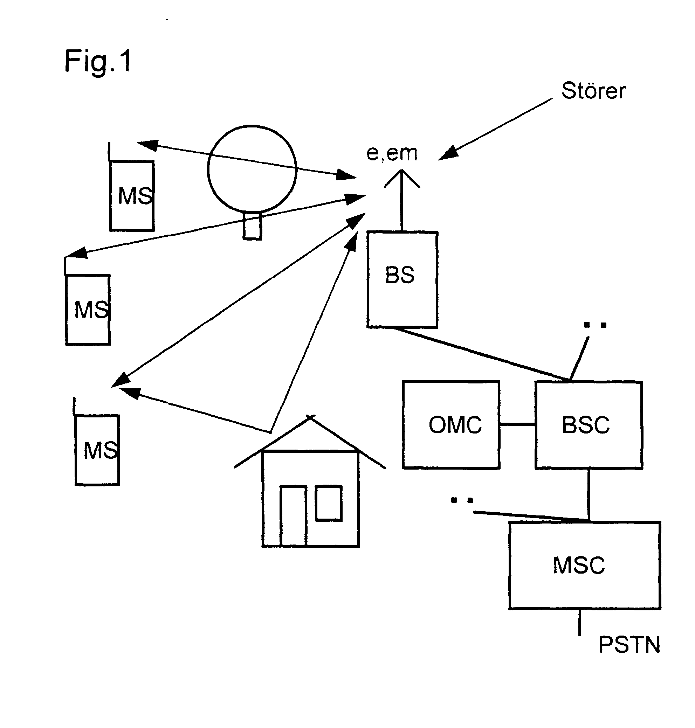

Das erste Ausführungsbeispiel wird anhand der FIG 1 bis 5 erläutert.

Das in FIG 1 dargestellte Mobil-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese MobilVermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann. In FIG 1 sind beispielhaft drei Funkverbindungen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Diese Struktur ist auf andere Mobilfunknetze übertragbar, in denen die Erfindung zum Einsatz kommen kann.

Die Kommunikationsverbindungen zwischen der Basisstation BS und den Mobilstationen MS unterliegt einer Mehrwegeausbreitung, die durch Reflektionen beispielsweise an Gebäuden oder Bepflanzungen zusätzlich zum direkten Ausbreitungsweg hervorgerufen werden. Geht man von einer Bewegung der Mobilstationen MS aus, dann führt die Mehrwegeausbreitung zusammen mit weiteren Störungen dazu, daß bei der empfangenden Basisstation BS sich die Signalkomponenten der verschiedenen Ausbreitungswege eines Teilnehmersignals zeitabhängig überlagern. Weiterhin wird davon ausgegangen, daß sich die Teilnehmersignale verschiedener Mobilstationen MS am Empfangsort zu einem Empfangssignal e, em überlagern. Aufgabe der empfangenden Basisstation BS ist es, in den Teilnehmersignalen übertragene Daten d zu detektieren und einzelnen teilnehmerindividuellen Kommunikationsverbindungen zuzuordnen.

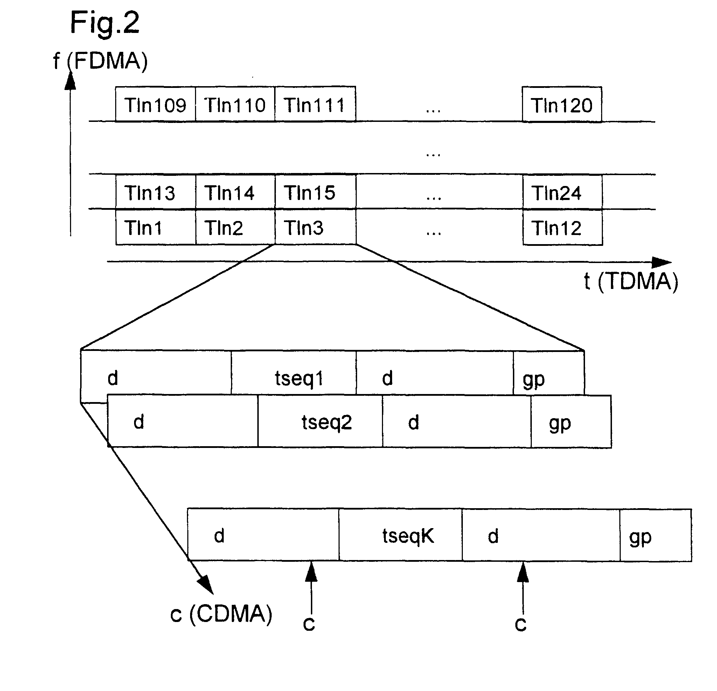

In FIG 2 ist die Übertragung der Teilnehmersignale über die Funkschnittstelle gezeigt. Die Funkschnittstelle hat dabei eine Frequenzmultiplex- (FDMA), eine Zeitmultiplex- (TDMA) und eine Kodemultiplex-Komponente (CDMA). Mehrere Frequenzbänder entlang der Frequenzachse f sind für das Mobilfunknetz vorgesehen. Weiterhin ist die Zeitachse t derart in ein Zeitraster bestehend aus mehreren Zeitschlitzen pro Zeitrahmen unterteilt, daß eine Übertragung in Funkblöcken erfolgt. Die Teilnehmersignale mehrerer Mobilstationen MS sind einer Teilnehmergruppe Tln1, Tln2 .. Tln120 zugeordnet, d.h. während des Funkblockes einer Teilnehmergruppe, beispielsweise Teilnehmergruppe Tln3 für die drei Mobilstationen MS der FIG 1 - im Ausführungsbeispiels also K=3, überlagern sich die durch unterschiedliche Teilnehmerkodes bezeichneten Teilnehmersignale zu einem Empfangssignal e, em, das von einer Empfangseinrichtung in der Basisstation BS auszuwerten ist.

Innerhalb eines Funkblockes besteht ein Teilnehmersignal aus zwei datentragenden Abschnitten mit Daten d, in deren Mitte eine teilnehmerindividuelle Trainingssequenz tseql bis tseqK eingebracht ist. Der Funkblock wird durch eine Schutzzeit gp abgeschlossen. Die Teilnehmersignale unterscheiden sich durch einen Teilnehmerkode c, wodurch sich innerhalb der datentragenden Abschnitte durch teilnehmerspezifische Feinstrukturen, die durch die teilnehmerspezifischen CDMA-Kodes $c^{(k)}$ , k=1..K, bestimmt sind. Durch diese im weiteren als Teilnehmerkodes bezeichneten CDMA-Kodes c, die empfangsseitig bekannt sind, ist eine Separierung der Teilnehmersignale möglich.

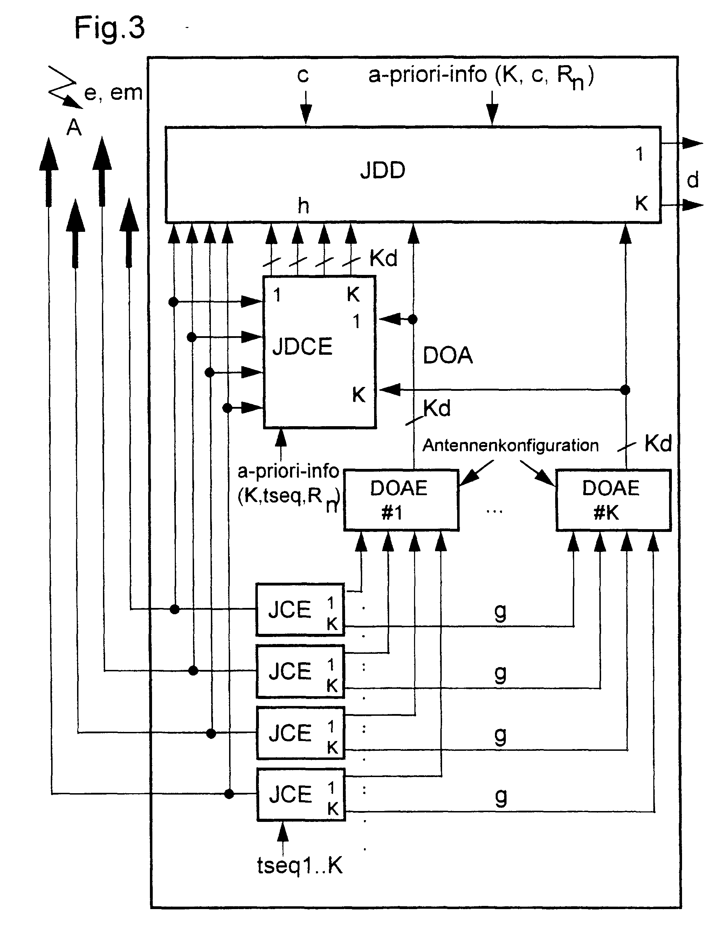

In FIG 3 ist eine Empfangseinrichtung mit zugeordneten Empfangssensoren A dargestellt. Diese Empfangseinrichtung ist Teil der Basisstation BS und empfängt von den sendenden Mobilstationen MS des Mobilfunknetzes Empfangssignale e, em. Im weiteren wird für die Basisstation BS der Empfangsfall dargestellt, nichtsdestotrotz besteht üblicherweise eine zweiseitige Kommunikationsverbindung, d.h. die Basisstation BS weist auch ein Sendeeinrichtung auf.

Die Ka=4 Empfangssensoren A bilden eine Antenneneinrichtung, die als intelligente Antenneneinrichtung ausgebildet ist, d.h. mehrere Empfangssensoren A dieser intelligenten Antenneneinrichtung empfangen zum gleichen Zeitpunkt Empfangssignale e oder em, die derartig miteinander kombiniert werden, daß die Übertragungsqualität gegenüber Systemen mit einer Empfangsantenne verbessert wird.

Aus den Empfangssignalen e, em werden z.B. durch eine Übertragung ins Basisband und darauffolgende Analog/Digitalwandlung digitale Signale erzeugt und in der Empfangseinrichtung ausgewertet.

Die Empfangseinrichtung umfaßt mehrere Kanalschätzer JCE, mehrere Richtungsschätzer DOAE, einen richtungsselektiven Kanalschätzer JDCE und eine Detektionseinrichtung JDD. Zusätzlich zu den Empfangssignalen e, em liegt in der Empfangseinrichtung ein Wissen a-priori-info über die Anzahl K der Teilnehmer, deren Trainingssequenzen tseql,..,tseqK und deren Teilnehmerkode c vor, ggf. kann auch über Informationen zu Störsignalen verfügt werden.

Den Kanalschätzern JCE werden die - bereits digitalisierten - Empfangssignale em der Empfangssensoren A zugeführt. In den Kanalschätzern JCE erfolgt eine Bestimmung der nicht richtungsselektiven Kanalimpulsantworten g durch eine Gauß-Markov- oder eine Maximum-Likelihood-Schätzung. Pro Kanalschätzer JCE wird das Empfangssignal eines Empfangssensors A ausgewertet, wobei an Ausgängen der Kanalschätzer JCE jeweils K nicht richtungsselektiven Kanalimpulsantworten g bereitgestellt werden. Die Berechnung dieser nicht richtungsselektiven Kanalimpulsantworten g erfolgt aus den Empfangssignalen em$^{(ka)}$, ka=1..Ka, die von den Trainingssequenzen tseql bis tseqK der K Teilnehmersignale herrühren.

Die nicht richtungsselektiven Kanalimpulsantworten g werden jeweils den K Richtungsschätzern DOAE zugeführt, die teilnehmerbezogen eine Richtungsschätzung basierend auf diesen nicht richtungsselektiven Kanalimpulsantworten g durchführen. Die Anzahl der pro Teilnehmersignal bestimmten Einfallsrichtungen wird mit Kd bezeichnet. Diese Anzahl Kd kann sich von Teilnehmersignal zu Teilnehmersignal unterscheiden. Beim Bestimmen der Einfallsrichtungen (auch DOA Direction Of Arrival bezeichnet) kommt der ein- oder mehrdimensionale UNITARY-ESPRIT-Algorithmus zum Einsatz. Die erfindungsgemäße Richtungsschätzung wird in den Richtungsschätzern DOAE durchgeführt.

Im richtungsselektiven Kanalschätzer JDCE werden die von den Trainingssequenzen tseql bis tseqK herrührenden Empfangssignale em$^{(ka)}$ der Empfangssensoren A, und die bestimmten Einfallsrichtungen DOA der Teilwellen verarbeitet und daraus richtungsselektive Kanalimpulsantworten h bestimmt. Diese Kanalschätzung beruht auf dem Verfahren der Maximum-Likelihood-Schätzung.

Schließlich werden die Ka Empfangssignale e$^{(ka)}$, ka=1..Ka, die bestimmten richtungsselektiven Kanalimpulsantworten h und die bestimmten Einfallsrichtungen DOA der Detektionseinrichtung JDD zugeführt, die zudem die Teilnehmerkodes c und zusätzliches Wissen a-priori-info über die Einfallsrichtung von Störsignalen in Form von $R_n$ oder die geographische Position von Mobilstationen MS in Bezug auf die Basisstation BS verarbeitet.

In dieser Detektionseinrichtung JDD findet basierend auf den Empfangssignalen e$^{(ka)}$, die von den datentragenden Abschnitten herrühren, die Detektion der Daten d statt. Dazu wird ein Zero-Forcing-Verfahren angewendet. Alternative vorteilhafte Verfahren sind die Maximum-Likelihood-Schätzung oder ein MMSE-Verfahren. Im Ergebnis der Datendetektion werden die detektierten Daten d der K Teilnehmersignale für einen Funkblock an Ausgänge der Detektionseinrichtung JDD gelegt.

Bei einer verfahrensgemäßen Betrachtung der Datendetektion wird in einem ersten Verfahrensschritt eine Kanalschätzung von Kanalimpulsantworten g ohne Berücksichtigung von Richtungsinhomogenitäten durchgeführt. In einem zweiten Schritt werden aus den bestimmten Kanalimpulsantworten g die Einfallsrichtungen DOA von einer oder mehreren Teilwellen bestimmt, worauf in einem dritten Schritt aus den Empfangssignalen unter Berücksichtigung der Einfallsrichtungen DOA richtungsselektive, d.h. unterschiedlichen Einfallsrichtungen zuordenbare, Kanalimpulsantworten h bestimmt werden. Dieser Schritt beruht auf der Erkenntnis, daß jede vom herkömmlichen, nicht richtungsselektiven Kanalimpulsantworten g$^{(k)\,(ka)}$ durch Überlagerung von Kd richtungsselektiven Kanalimpulsantworten h$^{(k)(ka)}$, mit k=1..K und kk=1..Ka zustande kommt.

Es gilt also:

$$g^{(k)(ka)} = \sum_{kd=1}^{Kd} a^{(k)(ka)(kd)} \cdot h^{(k)(kd)}, \quad \text{mit } k=1..K \text{ und } ka=1..Ka. \qquad (1)$$

Dabei sind a$^{(k)\,(ka)\,(kd)}$ komplexe Bewertungsfaktoren zur Überlagerung der richtungsselektiven Kanalimpulsantworten h$^{(k)(ka)}$ zu den nicht richtungsselektiven Kanalimpulsantworten g$^{(k)(ka)}$. Zum Bestimmen der richtungsselektiven Kanalimpulsantworten h können ggf. auch Kenntnisse über Einfallsrichtungen oder Korrelationsmatrizen von störenden Teilwellen ausgenutzt werden.

Die Anzahl W*K*Ka der insgesamt zu schätzenden Parameter in g$^{(K)\,(Ka)}$, k=1..K, ka=1..Ka, ist üblicherweise bei Mehrantennensystemen wesentlich größer als die Anzahl W*K*Kd der insgesamt zu schätzenden Parameter in h$^{(k)\,(kd)}$, k=1..K, kd=1..Kd, da Ka > Kd. Damit kann der Rechenaufwand beim Schätzen der Parameter nach dem erfindungsgemäßen Verfahren verringert werden.

Während des Empfangs eines kombinierten Empfangssignals em, das vorteilhafterweise von den Trainingssequenzen der Teilnehmersignale herrührt und die Empfangssignale em$^{(ka)}$, ka=1.. Ka der Ka Empfangssensoren enthält, hat dieses Empfangssignal em die Form:

$$em = G \cdot h + n_m \qquad (2)$$

mit G als bekannter Matrix (L*Ka)x(W*K*Kd), wobei L die Anzahl der zeitdiskreten Abtastwerte des Empfangssignals em und W die Länge der Kanalimpulsantworten bezeichnet. Diese Matrix G ist durch die geometrische Anordnung und die komplexen Charakteristiken der Ka Empfangssensoren, durch die gesendeten Trainingssequenzen und die Kd Einfallsrichtungen DOA gegeben. Der Vektor h enthält das zeitdiskrete Basisbandäquivalent der K*Kd richtungsselektiven Kanalimpulsantworten $h^{(K)(Kd)}$. $n_m$ bezeichnet einen unbekannten (L*Ka) Spaltenvektor eines zeitdiskreten Störsignals.

Aus Gleichung (1) sind G und em bekannt, so daß die richtungsselektiven Kanalimpulsantworten h bestimmt werden können.

Während der datentragenden Abschnitte hat das kombinierte Empfangssignal e der Empfangssignale $e^{(ka)}$ der Empfangssensoren die Form:

$$e = A \cdot d + n. \tag{3}$$

Wobei A eine (M*Ka)x(N*K) Matrix, wobei M die Anzahl der diskreten Abtastzeitpunkte des Empfangssignals und N die Anzahl der übertragenen Datensymbole pro Teilnehmer bezeichnet. n ist wiederum ein unbekannter (M*Ka) Spaltenvektor eines zeitdiskreten Störsignals.

In Gleichung (3) sind A - durch die K*Kd Einfallsrichtungen, die richtungsselektiven Kanalimpulsantworten h, die geometrische Anordnung und komplexe Charakteristiken der Empfangssensoren und beim Verwenden von einer CDMA-Teilnehmerseparierung durch die benutzten Teilnehmerkode - und e bekannt, so daß die Daten d detektiert werden können.

In einem vierten Verfahrensschritt werden aus von den datentragenden Abschnitten der K Teilnehmersignale herrührenden Empfangssignalen e unter Verwendung der zuvor bestimmten Einfallsrichtungen DOA und der richtungsselektiven Kanalimpulsantworten h die Daten d detektiert. Bei diesem Schritt können ggf. auch Kenntnisse über Einfallsrichtungen, die Leistung, das Spektrum oder die Kovarianzmatrix von Störsignalen ausgenutzt werden.

Die Bestimmung der richtungsselektiven Kanalimpulsantworten h erfolgt vorteilhafterweise nach dem Verfahren der Gauß-Markov -Schätzung, wobei ein Schätzwert h für die richtungsselektive Kanalimpulsantworten h aus:

$$\hat{h} = (G^{*T} \cdot \tilde{R}_n^{-1} G)^{-1} \cdot G^{*T} \cdot \tilde{R}_n^{-1} \cdot em \tag{4}$$

berechnet werden kann. $\tilde{R}_n$ bezeichnet die Kovarianzmatrix des Störsignals $n_m$, welche durch die Einfallsrichtungen und relativen Leistungen der störenden Teilwellen, die Spektren der Störsignale, sowie durch die geometrische Anordnung und komplexe Strahlungscharakteristik der Empfangssensoren bestimmt ist. Dieses Verfahren entspricht der Maximum-Likelihood-Schätzung der richtungsselektiven Kanalimpulsantworten h und kann durch rekursives Auflösen von (4) aufwandsgünstig realisiert werden.

Zusammenhänge zwischen der Richtungsschätzung bzw. der Bestimmung der richtungsselektiven Kanalimpulsantworten und der Datendetektion werden wie folgt ausgenutzt. Die K Teilnehmersignale bestehen aus datentragenden Abschnitten und Trainingssequenzen, wobei aus den von den Trainingssequenzen der K Teilnehmersignale herrührenden Empfangssignalen die richtungsselektiven Kanalimpulsantworten bestimmt werden und die Daten aus den von den datentragenden Abschnitten herrührenden Empfangssignalen detektiert werden.

Auch können zur Aufwandsverringerung die Einfallsrichtungen DOA und/oder die richtungsselektiven Kanalimpulsantworten h mit einem Nachführverfahren nach einer Periode, die länger als eine funkblockbezogene Rahmenstruktur ist, erneut bestimmt werden.

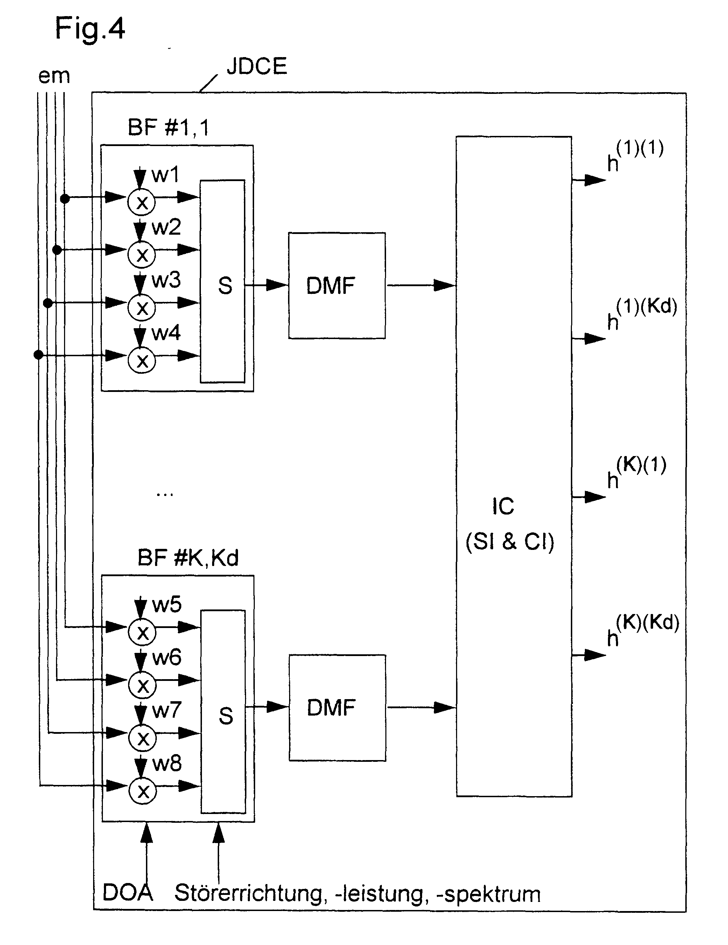

FIG 4 zeigt einen richtungsselektiven Kanalschätzer JDCE, der Strahlformer BF enthält, die für die Ka Empfangssignale $em^{(ka)}$ jeweils eine Gewichtung durch strahlformerindividuelle Wichtungsfaktoren w1 bis w4 bzw. w5 bis w8 und ein Aufsummieren der Signalkomponenten in einer Summiereinrichtung S zu einem Signal, für das das Signal-Rausch-Verhältnis maximiert wird, vornehmen, wobei dieses Signal anschließend einem dekorrelierenden signalangepaßten Filter DMF zugeführt wird. In einer Einrichtung IC zur Interferenzauslöschung werden die Eigen- SI und Kreuzinterferenzen CI ausgeglichen und richtungsselektive Kanalimpulsantworten h gewonnen.

In den Strahlformern BF werden zusätzlich die Informationen über die Einfallsrichtungen DOA der Teilwellen und die Richtungen und relativen Leistungen der störerenden Teilwellen verarbeitet. Diese Richtungen beeinflussen die Wichtungsfaktoren w1 bis w4 bzw. w5 bis w8 für jeden Strahlformer BF individuell. Die Strahlformer BF und die dekorrelierenden signalangepaßten Filter DMF wirken wie ein räumlich auflösendes dekorrelierendes signalangepaßtes Filter, die jeweils auf eine Teilwelle - somit K*Kd - angewandt werden.

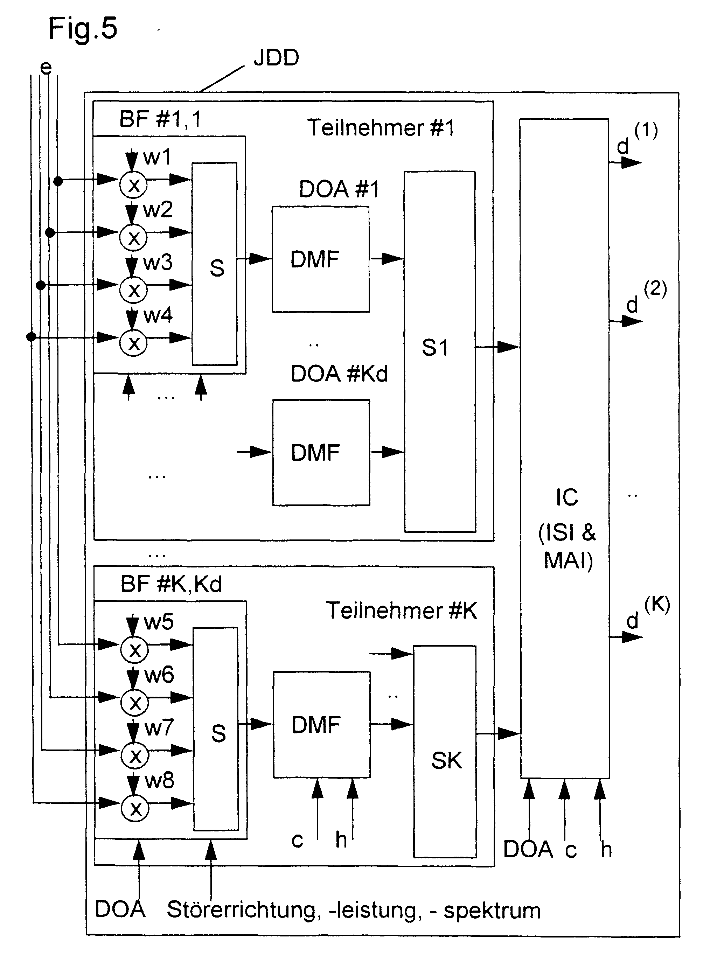

In FIG 5 wird die Detektionseinrichtung JDD gezeigt. Diese Detektionseinrichtung JDD verarbeitet die datentragenden Abschnitte der Empfangssignale e, wobei entsprechend der geschilderten Vorgehensweise beim richtungsselektiven Kanalschätzer JDCE ein räumlich auflösendes dekorrelierendes signalangepaßtes Filter die K*Kd Teilwellen der Empfangssignale e zum Maximieren des Signal-Rausch-Verhältnisses überlagert. Diese Maximierung des Signal-Rausch-Verhältnisses wird für jede Einfallrichtung DOA eines jeden Teilnehmersignals durchgeführt, wobei die Kd Signalkomponenten der einzelnen Teilwellen eines Teilnehmersignals nach dem Maximum-Ratio-Combining-Verfahren in Summiereinrichtungen S1 bis SK überlagert werden.

Die Teilnehmersignale werden anschließend einer Einrichtung IC zur Interferenzauslöschung zugeführt, die die Intersymbol-ISI und Mehrfachzugriff- (Multiple Access) Interferenzen MAI ausgleicht. Dabei werden auch die Informationen über die Teilnehmerkodes c, die Einfallsrichtungen DOA, die richtungsselektiven Kanalimpulsantworten h und ggf. a-priori-Wissen über die Störer in Form von $R_n$ verarbeitet. An einem Ausgang der Einrichtung IC zur Interferenzauslöschung liegen die detektierten Daten d der Teilnehmersignale separiert vor. Bei der Interferenzauslöschung kommt ein sogenanntes JD (Joint Detection) Verfahren zum Einsatz.

Durch die Empfangseinrichtung wird die zeitliche Dispersion und Varianz der Empfangssignale verringert. Weiterhin können durch die räumliche Auflösung eine größere Anzahl von Mobilstationen MS in einem Funkbereich einer Basisstation BS versorgt werden bzw. der Funkbereich kann durch die Richtwirkung derart gestaltet werden, daß auch die Sendeleistungen der Mobilstationen MS deutlich verringert werden.

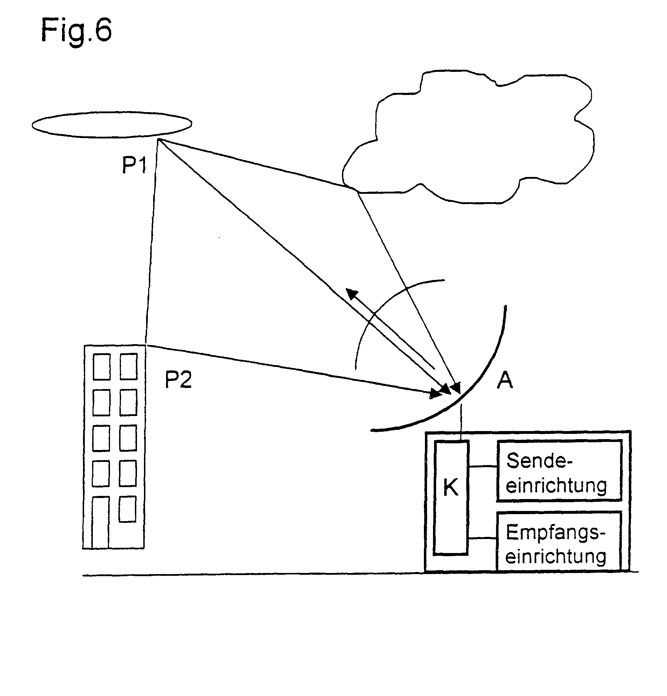

FIG 6 zeigt ein zweites Ausführungsbeispiel mit einem Szenario eines Radarsystems.

Ein Radarsystem umfaßt eine Sendeeinrichtung und eine Empfangseinrichtung, die über ein Koppelglied K mit einer Antenneneinrichtung A mit Ka Empfangssensoren verbunden sind. Während einer Sendeperiode wird ein Sendesignal, das mit einer senderindividuellen Feinstruktur versehen ist, über die Antenneneinrichtung abgestrahlt. Ein Teil der abgestrahlten Energie erreicht einen Flugkörper und wird dort reflektiert.

Das reflektierte Signal, im folgenden Teilnehmersignal genannt, besteht aus einer Vielzahl von Teilwellen, wobei Kd Teilwellen über verschiedene Ausbreitungswege die Antenneneinrichtung A erreichen. Die Teilwellen des Teilnehmersignals werden durch Brechung, Beugung und Reflexion an Wolken oder Gebäuden zum Radarsystem zurückgeworfen und in der Empfangseinrichtung empfangen und ausgewertet.

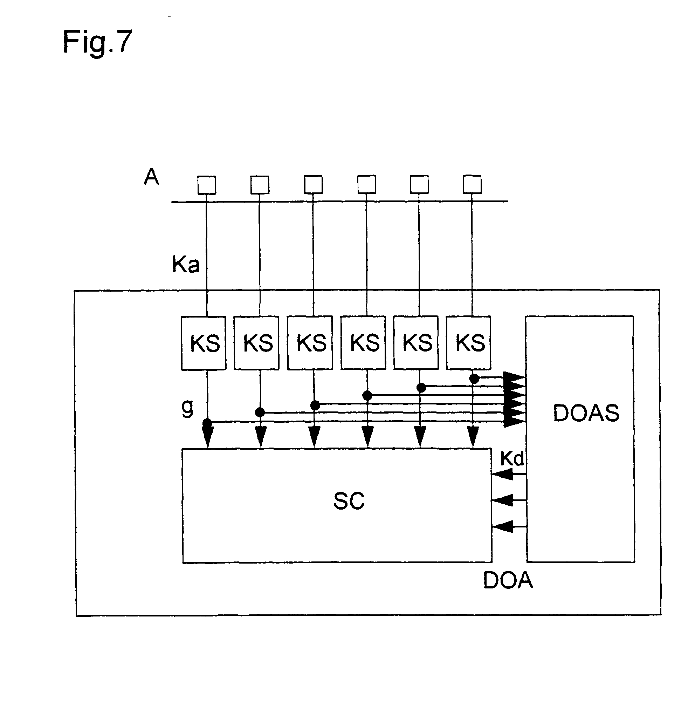

FIG 7 zeigt schematisch die Empfangseinrichtung, der die Ka Empfangssensoren A zugeordnet sind. In Ka Kanalschätzern KS wird sensorbezogen eine Kanalimpulsantwort g geschätzt. Dazu wird im Radarsystem die Korrelation der bekannten senderindividuellen Feinstruktur mit dem Empfangssignal ermittelt.

Aus den damit bestimmten Ka Kanalimpulsantworten g, die einem Richtungsschätzer DOAS zugeführt werden, ermittelt dieser Kd Einfallsrichtungen DOA für das Teilnehmersignal. Die bei der Kanal- und Richtungsschätzung eingesetzten Verfahren entsprechen denen im ersten Ausführungsbeispiel.

In einem Signalkombiner SC des Radarsystem werden die Kanalimpulsantworten g und die Einfallsrichtungen DOA der Teilwellen des Teilnehmersignals dahingehend ausgewertet, daß die Position - aus den Einfallsrichtungen DOA, der Signallaufzeit und der Empfangsfeldstärke der Teilwellen - und die Fluggeschwindigkeit - aus der Dopplerfrequenz bestimmt wird.

**Patentansprüche**

1. Verfahren zum Richtungsschätzen von Teilwellen zumindest eines Teilnehmersignals, bei dem

   - einer Empfangseinrichtung eine Anzahl Ka Empfangssensoren zugeordnet ist,
   - Ka Empfangssignale empfangen werden, die von mindestens einem durch eine senderindividuelle Feinstruktur geprägten Teilnehmersignal herrühren, wobei ein k-tes Teilnehmersignal, k=1..K, durch Kd, sich in ihrer Einfallsrichtung (DOA) am Empfangsort unterscheidenden Teilwellen übertragen wird, **gekennzeichnet dadurch, dass**
   - aus den Empfangssignalen den Ka Empfangssensoren zugeordnete Kanalimpulsantworten (g) bestimmt werden,
   - aus den Kanalimpulsantworten (g) die Einfallsrichtung (DOA) von zumindest einer Teilwelle ermittelt wird.

2. Verfahren nach Anspruch 1, bei dem die Kanalimpulsantworten (g) aus die senderindividuellen Feinstrukturen bildenden Trainingssequenzen (tseql, tseq2, ... tseqK) der Teilnehmersignale bestimmt werden.

3. Verfahren nach Anspruch 1 oder 2, bei dem Teilnehmersignale von mehreren Sendern (MS) oder Reflektoren (P1, P2) sich bei der Empfangseinrichtung zu den Empfangssignalen überlagernd eintreffen, wobei diese Signale gleichzeitig in einem Frequenzkanal übertragen werden.

4. Verfahren nach einem der vorhergehenden Ansprüche, bei dem zum Ermitteln der Einfallsrichtung (DOA) der Teilwellen zusätzlich Informationen zumindest über eine der folgenden Werte: Einfallsrichtung (DOAs), Leistung, Spektrum oder eine Korrelationsmatrix von Störsignalen berücksichtigt werden.

**5.** Verfahren nach Anspruch 3 oder 4, bei dem
die Teilnehmersignale durch eine Entspreizung mit individuellen Teilnehmerkodes separierbar sind.

**6.** Verfahren nach einem der vorhergehenden Ansprüche, bei dem zum Ermitteln der Einfallsrichtung (DOA) hochauflösende Richtungsschätzverfahren angewandt werden.

**7.** Verfahren nach Anspruch 6, bei dem
zum Ermitteln der Einfallsrichtung (DOA) ein MUSIC-Verfahren angewandt wird.

**8.** Verfahren nach Anspruch 6, bei dem
zum Ermitteln der Einfallsrichtung (DOA) ein eindimensionales oder mehrdimensionales UNITARY-ESPRIT-Verfahren angewandt wird.

**9.** Verfahren nach einem der vorhergehenden Ansprüche, bei dem zum Bestimmen der Einfallsrichtungen (DOA) der Teilwellen eine Mittelung der bestimmten Werte über ein Zeitintervall erfolgt.

**10.** Anwendung eines verfahrens nach einem der vorhergehenden Ansprüche, in einem Mobilfunksystem.

**11.** Anwendung eines verfahrens nach einem der vorhergehenden Ansprüche, in einem Radar- bzw. Sonarsystem.

**12.** Anwendung eines verfahrens nach einem der vorhergehenden Ansprüche, in einem seismischen Meßsystem.

**Claims**

**1.** Method for direction estimation for wave elements of at least one subscriber signal, in which

- a receiving device is assigned a number Ka of receiving sensors,
- Ka received signals are received which are caused by at least one subscriber signal which has a transmitter-specific fine structure impressed on it, in which case a k-th subscriber signal, k = 1..K, is transmitted by means of Kd wave elements whose directions of arrival (DOA) at the receiving location differ, **characterized in that**
- channel impulse responses (g) assigned to the Ka receiving sensors are determined from the received signals
- the direction of arrival (DOA) of at least one wave element is determined from the channel impulse responses (g).

**2.** Method according to Claim 1, in which
the channel impulse responses (g) are determined from training sequences (tseq1, tseq2, ... tseqK) of the subscriber signals, which training sequences (tseq1, tseq2, ... tseqK) form the transmitter-specific fine structures.

**3.** Method according to Claim 1 or 2, in which
subscriber signals from a plurality of transmitters (MS) or reflectors (P1, P2) arrive superimposed, to form the received signals, at the receiving device, in which case these signals are transmitted at the same time in one frequency channel.

**4.** Method according to one of the preceding claims, in which the determination of the directions of arrival (DOA) of the wave elements also takes account of information relating at least to one of the following values: direction of arrival (DOA), power, spectrum or a correlation matrix of interference signals.

**5.** Method according to Claim 3 or 4, in which the subscriber signals can be separated by despreading using individual subscriber codes.

**6.** Method according to one of the preceding claims, in which high-resolution direction estimation methods are used to determine the direction of arrival (DOA).

**7.** Method according to Claim 6, in which
a MUSIC method is used to determine the direction of arrival (DOA).

**8.** Method according to Claim 6, in which
a single-dimensional or multi-dimensional UNITARY-ESPRIT method is used to determine the direction of arrival (DOA).

**9.** Method according to one of the preceding claims, in which the specific values are averaged over a time interval in order to determine the directions of arrival (DOA) of the wave elements.

**10.** Use of a method according to one of the preceding claims in a mobile radio system.

**11.** Use of a method according to one of the preceding claims in radar or sonar system.

**12.** Use of a method according to one of the preceding claims in a seismic measurement system.

**Revendications**

**1.** Procédé d'évaluation de la direction d'ondes partielles d'au moins un signal d'abonné, pour lequel

- un nombre Ka de capteurs de réception est attribué à un équipement de réception,
- Ka signaux de réception sont reçus, qui proviennent d'au moins un signal d'abonné marqué par de légères différences de structure entre les émetteurs, où un kième signal d'abonné, k=1...K, est transmis par Kd ondes partielles se différenciant de par leur direction (DOA) incidente au lieu de réception, **caractérisé en ce que**
- les réponses (g) impulsionnelles de canaux attribuées aux Ka capteurs de réception sont déterminées à partir des signaux de réception,
- la direction (DOA) incidente d'au moins une onde partielle est déterminée à partir des réponses (g) impulsionnelles de canaux.

**2.** Procédé suivant la revendication 1, pour lequel les réponses (g) impulsionnelles de canaux sont déterminées à partir des séquences (tseq1, tseq2, ... tseqK) d'entraînement, formées de légères différences de structure entre les émetteurs, des signaux d'abonnés.

**3.** Procédé suivant la revendication 1 ou 2, pour lequel des signaux d'abonnés de plusieurs émetteurs (MS) ou réflecteurs (P1, P2) arrivent près de l'équipement de réception en se superposant aux signaux de réception, ces signaux étant transmis simultanément dans un canal de fréquences.

**4.** Procédé suivant l'une des revendications précédentes, pour lequel des informations au moins sur l'une des valeurs suivantes : direction (DOAs) incidente, puissance, spectre ou une matrice de corrélation de signaux parasites sont en plus prises en compte pour la détermination de la direction (DOA) incidente des ondes partielles.

**5.** Procédé suivant la revendication 3 ou 4, pour lequel les signaux d'abonnés peuvent être séparés par un démultiplexage avec des codes d'abonnés individuels.

**6.** Procédé suivant l'une des revendications précédentes, pour lequel des procédés d'évaluation de la direction de haute résolution sont appliqués pour la détermination de la direction (DOA) incidente.

**7.** Procédé suivant la revendication 6, pour lequel un procédé MUSIC est appliqué pour la détermination de la direction (DOA) incidente.

**8.** Procédé suivant la revendication 6, pour lequel un procédé UNITARY ESPRIT unidimensionnel ou pluridimensionnel est appliqué pour la détermination de la direction (DOA) incidente.

**9.** Procédé suivant l'une des revendications précédentes, pour lequel le calcul d'une moyenne des valeurs déterminées est effectuée sur un intervalle de temps pour la détermination des directions (DOA) incidentes des ondes partielles.

**10.** Application d'un procédé suivant l'une des revendications précédentes dans un système de radiotéléphonie mobile.

**11.** Application d'un procédé suivant l'une des revendications précédentes dans un système radar ou sonar.

**12.** Application d'un procédé suivant l'une des revendications précédentes dans un système de mesure sismique.

# Fig.1

# Fig.2

f (FDMA)

| TIn109 | TIn110 | TIn111 | ... | TIn120 |

...

| TIn13 | TIn14 | TIn15 | ... | TIn24 |
| TIn1 | TIn2 | TIn3 | ... | TIn12 |

t (TDMA)

| d | tseq1 | d | gp |

| d | tseq2 | d | gp |

| d | tseqK | d | gp |

c (CDMA)   c   c

## Fig.3

# Fig.4

# Fig.5

# Fig.6

P1

P2

A

| K | Sende-einrichtung |
| --- | --- |
| | Empfangs-einrichtung |

## Fig.7